# EUROPÄISCHE PATENTSCHRIFT

(11) **EP 0 786 898 B1**
(45) Veröffentlichungstag und Bekanntmachung des Hinweises auf die Patenterteilung: **06.01.2010**
(21) Anmeldenummer: 97200105.1
(22) Anmeldetag: 16.01.1997
(51) Int. Cl.: H04N 5/18

(54) **Bild-ZF-Demodulatorschaltung mit variabler ZF-Verstärkungsregelung**
Picture IF demodulation circuit with variable IF-amplification control
Circuit de démodulation de fréquence intermédiaire d'image avec réglage variable de l'amplification à fréquence intermédiaire

(30) Priorität: 23.01.1996 DE 19602187
(43) Veröffentlichungstag der Anmeldung: 30.07.1997
(73) Patentinhaber: NXP B.V., 5656 AG Eindhoven (NL)
(72) Erfinder: Brilka, Joachim, Röntgenstrasse 24, 22335 Hamburg (DE)
(74) Vertreter: Krott, Michel

(56) Entgegenhaltungen:
- EP-A- 0 491 423
- EP-A- 0 601 299

## Beschreibung

Die Erfindung betrifft eine Bild-ZF-Demodulatorschaltung mit ZF-Verstärkungsregelung mit variabler Zeitkonstante, der ein Synchronisationsimpulse, eine Schwarzschulter und Bildinformationen enthaltender Zwischenfrequenz-Bildträger mit positiv aufmoduliertem Bildsignal zugeführt wird, welche mittels der Verstärkungsregelung das Bild-ZF-Signal auf einen Soll-Amplitudenwert verstärkt und welche einen ZF-Demodulator (3) aufweist, der das ZF-Bildsignal demoduliert und ausgangsseitig ein Bildsignal liefert.
In Bildwiedergabegeräten vorgesehene Fernsehtuner zum Empfang von Fernsehsignalen setzen das empfangene Bildsignal im allgemeinen auf eine Zwischenfrequenzebene um. In dieser ZF-Ebene ist das Bildsignal einem ZF-Bildträger aufmoduliert. Abhängig von der Fernsehnorm kann dieses Bildsignal positiv oder negativ aufmoduliert sein. Positiv aufmoduliert bedeutet dabei, daß ein Bildinhalt des Bildsignals zu größeren Weißamplituden hin zu einer größeren Modulationsamplitude des Zwischenfrequenz-Bildträgers führt. Umgekehrt führen in dem Bildsignal enthaltene Synchronisationsimpulse zu einer geringen oder nicht mehr vorhandenen Modulationsamplitude des Zwischenfrequenz-Bildträgers. Eine derartige Positiv-Modulation ist beispielsweise für Bildsignale der SECAM-L-Norm vorgesehen.
Bei derartigen positiv modulierten Bild-ZF-Signalen besteht das Problem, daß eine Verstärkungsregelung auf der ZF-Ebene sich nicht ohne weiteres an dem Bildsignal orientieren kann, da die maximale Modulationsamplitude von dem Weißinhalt des Bildinhaltes abhängig ist. Damit ergäbe sich eine Verstärkungsregelung, die vom Bildinhalt abhängig ist. Dies ist unerwünscht. Deshalb wird zur Verstärkungsregelung auf den in jeder vertikalen Austastlücke vorhandenen Weißreferenzimpuls (100 % Bildträger) zurückgegriffen. Dieser hat eine Dauer von ca. 10 µs bei einer Wiederholzeit von 20 ms, weshalb hier ein Spitzenwertdetektor mit einer relativ großen Zeitkonstante für die Regelung verwendet werden muß, wodurch die AGC sehr langsam wird.

Aus EP-A-0 491 423 ist eine Schaltungsanordnung zur Regelung der Amplitude eines Fernsehsignals bekannt, welche sich zweier Detektoren zum Detektieren des Weißwertes und des Schwarzwertes des Fernsehsignals bedient und welche den Vergleich des Schwarzwertes mit einem Referenzsignal zum zusätzlichen Regeln der Amplitude des Fernsehsignals einsetzt.

Aus EP-A-0 601 299 ist ein Verstärkungsregelungssystem für Fernsehsignale mit positiver Modulation bekannt, welches einen ZF-Verstärker, einen Demodulator, einen geschalteten Verstärker und einen Spitzwertdetektor aufweist. Dabei wird der geschaltete Verstärker während des Schwarzwert-Intervalls aktiviert und steuert die Verstärkung des ZF-Verstärkers.

In einem integrierten Bild-ZF-Schaltkreis der Firma Philips (Typ TDA 9815) wird zur Umgehung dieses Problems der Schwarzwert des Bildsignals detektiert und mit einer festen Referenzspannung verglichen. Diese Referenzspannung entspricht dem nominalen Schwarzwert eines Bildsignals mit Soll-Amplitude abzüglich 6 dB bezogen auf den "Träger-Null-Wert" (Synchronwert). Abhängig vom Ergebnis dieses Vergleiches wird die AGC-Zeitkonstante auf einen größeren oder kleineren Wert umgeschaltet. Hierbei besteht jedoch das Problem, daß der Gleichspannungsanteil des Bildsignals in der integrierten Schaltung um etwa ± 100 mV bezogen auf den Synchronwert bedingt durch Offset des Videdemodulators schwanken kann. Damit weist auch der Schwarzwert, der mit der Referenzspannung verglichen wird, eine Gleichspannungsvariation von etwa ± 70 mV auf. Dies wiederum führt dazu, daß der Vergleich des detektierten Schwarzwertes mit der festen Referenzspannung streuende Ergebnisse in Abhängigkeit dieses Gleichspannungsoffsets liefert. Damit ist die Variation der Zeitkonstante, mit der die Verstärkungsregelung nachgeführt wird, von dem Gleichspannungsoffset abhängig. Je nach Gleichspannungsoffset wird früher oder später auf eine kürzere bzw. längere Zeitkonstante umgeschaltet. Dieser Effekt ist unerwünscht.

Es ist Aufgabe der Erfindung, eine Bild-ZF-Demodulatorschaltung der eingangs genannten Art anzugeben, bei der die Variation der Zeitkonstante der Verstärkungsregelung unabhängig von einem schaltungsinternen Gleichspannungs-Offset des Bildsignals ist. Ferner soll die Regelung unabhängig vom Bildinhalt sein.

Diese Aufgabe ist erfindungsgemäß dadurch gelöst, daß ein Schwarzwertdetektor (8) mit Mitteln zur Erzeugung eines als Schwellwertsignal eingesetzten Schwarzwertsignals, dessen Amplitudenwert von dem Amplitudenwert der Schwarzschulter des vom Amplitudendemodulator (3) gelieferten Bildsignals abhängig ist, vorgesehen ist, daß eine Gleichspannungs-Offset-Schaltungsanordnung (4) vorgesehen ist, welche eine Anhebung des Gleichspannungsanteils des Bildsignals und/oder eine Absenkung des Gleichspannungsanteils des Schwellwertsignals in der Weise vornimmt, daß beide Signale relativ zueinander um einen vorgegebenen Wert verschoben werden, daß eine Komparatorschaltung (7) vorgesehen ist, der die beiden relativ zueinander verschobenen Signale zugeführt werden, in denen die Komparatorschaltung den Spannungswert der in dem Bildsignal auftretenden Synchronisationsimpulse mit dem Spannungswert des Schwellwertsignals vergleicht, und daß die Komparatorschaltung (7) ein Vergleichssignal liefert, dessen Amplitude von der Ergebnis-Amplitude dieses Vergleichs abhängig ist und die Zeitkonstante der Verstärkungsregelung verändert.

Das der Bild-ZF-Verstärkerschaltung zugeführte Bild-ZF-Signal gelangt nach der Amplitudendemodulation als Bildsignal an einen Schwarzwert-Detektor. Dieser detektiert die Amplitude der Schwarzschulter, die in dem Bildsignal enthalten ist. Dieses Schwarzwert-Signal wird nachfolgend als Schwellwert-Signal herangezogen.

Es ist ferner eine Gleichspannungs-Offset-Schaltungsanordnung vorgesehen, welche das der Schaltungsanordnng zugeführte Bildsignal und das Schwellwert-Signal relativ zueinander verschiebt. Es wird also eine Variation der Gleichspannungsanteile eines oder beider Signale vorgenommen. Entscheidend hierbei ist, daß die beiden Signale relativ zueinander um einen vorgegebenen Wert verschoben werden. Dies geschieht in der Weise, daß der Gleichspannungsanteil des Bildsignals angehoben und/oder der Gleichspannungsanteil des Schwellwert-Signals abgesenkt wird. Unabhängig davon, ob beide Signale oder nur eines der Signale bezüglich seines Gleichspannungsanteils variiert wird, müssen die Signale relativ zueinander immer um den vorgegebenen Wert verschoben werden.

Diese beiden bezüglich ihres Gleichspannungsanteils relativ zueinander verschobenen Signale, also das verschobene Bildsignal und das verschobene Schwellwertsignal werden einer Komparatorschaltung zugeführt, welche den Spannungswert des Schwellwertsignals mit dem Spannungswert der in dem verschobenen Bildsignal auftretenden Synchronisationsimpulse vergleicht. Je nachdem, ob diese Synchronisationsimpulse einen größeren oder einen kleineren Wert als Spannungswert des Schwellwertsignals aufweisen, liefert die Komparatorschaltung ein variierendes Vergleichssignal.

Dieses Vergleichssignal gibt also an, ob die in dem verschobenen Bildsignal enthaltenen Synchronisationsimpulse einen kleineren oder größeren Spannungswert Amplitude als das verschobene Schwellwertsignal aufweisen. In Abhängigkeit dieses Vergleiches wird die Zeitkonstante der Verstärkungsregelung, mittels der die Verstärkung des Bild-ZF-Signals so geregelt wird, daß nach dem Amplitudendemodulator das Bildsgignal eine Soll-Amplitude aufweist, verändert.

Diese Schaltungsanordnung weist vor allem den Vorteil auf, daß die Variation der Zeitkonstante der Verstärkungsregelung nicht von einem DC-Offset des Bildsignals abhängig ist. Die Ursache hierfür liegt darin, daß bei der Komparatorschaltung zugeführten Signale aus dem Videausgangssignal des Amplitudendemodulators abgeleitet sind. Damit wirken sich DC-Offset dieses Bildsignals in beiden Signalen in ähnlicher Weise aus, so daß der relative Vergleich dieser Signale von einem DC-Offset des Bildsignals nur wenig beeinflußt wird. Dadurch, daß ausschließlich die Spannungswerte der Synchronisationsimpulse bzw. der Schwarzschulter des Bildsignals ausgewertet werden, ist keinerlei Abhängigkeit vom Bildinhalt des Bildsignals gegeben.

Gemäß einer Ausgestaltung der Erfindung ist vorgesehen, daß die Gleichspannungs-Offset-Schaltung eine relative Verschiebung des Schwellwertsignals und des Bild signals zueinander um die halbe nominale Amplitude der Synchronisationsimpulse vornimmt.

Für die Veränderung der variablen Zeitkonstante der Verstärkungsregelung hat es sich als vorteilhaft erwiesen, die relative Verschiebung des Schwellwertsignals und des Bildsignals zueinander um die halbe Nominal-Amplitude der Synchronisationsimpulse vorzunehmen, d.h. um die halbe gemäß der Norm vorgesehene Soll-Amplitude der Synchronisationsimpulse bei gewünschtem Pegel des Bild-ZF-Signals und damit des Bildsignals.

Wie oben bereits erläutert wurde, kommt es grundsätzlich darauf an, daß die beiden Komparatorschaltung zugeführten Signale relativ zueinander um den vorgegebenen Wert, vorteilhafter um die halbe nominale Amplitude der Synchronisationsimpulse, relativ zueinander verschoben werden. Im einfachsten Fall genügt es hierzu, wie gemäß einer weiteren Ausgestaltung der Erfindung vorgesehen ist, daß die Gleichspannungs-Offset-Schaltung eine Anhebung des Gleichspannungsanteils des Bildsignals um die halbe nominale Amplitude der Synchronisationsimpulse vornimmt.

Im einfachsten Fall kann die Variation der Zeitkonstante, mit der die Verstärkungsregelung durchgeführt wird, in Abhängigkeit eines einfachen größer/kleiner Vergleich der beiden dem Komparator zugeführten Signale vorgenommen werden. Hierzu ist gemäß einer weiteren Ausgestaltung der Erfindung vorgesehen, daß dann, wenn der mittels des Komparators durchgeführte Vergleich ergibt, daß ein Synchronisationsimpuls einen kleineren Spannungswert als das Schwellwertsignal aufweist, die Regelzeitkonstante vergrößert wird und daß dann, wenn der Vergleich ergibt, daß ein Synchronisationsimpuls einen größeren Spannungswert als das Schwellwertsignal aufweist, die Regelzeitkonstante verkleinert wird.

Hiermit wird erreicht, daß dann, wenn das Bild-ZF-Signal am Eingang des Amplitudendemodulators einen deutlich zu kleinen Pegel aufweist, also eine deutlich größere Verstärkung erfahren muß, als dies momentan der Fall ist, auf eine kleine Regelzeitkonstante umgeschaltet wird. Damit findet eine schnelle Anpassung der Verstärkungsregelung in der Weise statt, daß die Verstärkungsregelung schnell erhöht werden kann. Umgekehrt muß dann, wenn der Synchronisationsimpuls in dem dem Komparator zugeführten verschobenen Bildsignal einen kleineren Spannungswert als das Schwellwertsignal aufweist, das Bild-ZF-Signal vor dem Amplitudendemodulator also schon fast den nominellen Pegel aufweist, auf eine großere Regel-Zeitkonstante umgeschaltet werden.

Gemäß einer weiteren Ausgestaltung der Erfindung ist vorgesehen, daß der Schwarzwertdetektor ein Tastimpuls-Signal liefert, das die in dem Bildsignal auftretenden Synchronisationsimpulse kennzeichnet und das von der Komparatorschaltung ausgewertet wird.

Wie oben bereits erläutert wurde, muß die Komparatorschaltung das gegebenenfalls verschobene Schwellwertsignal und das ihr zugeführte, gegebenenfalls mit einem Gleichspannungs-Offset versehene Bildsignal in der Weise miteinander vergleichen, daß die in dem Bildsignal enthaltenen Synchronisationimpulse bezüglich ihres Spannungswertes mit dem Spannungswert des Schwellwertsignals verglichen werden. Dies bedeutet mit anderen Worten, daß der Vergleich nur während der Synchronisationsimpulse des Bildsignals stattfinden darf. Zur Feststellung dieser Zeitpunkte besteht die vorteilhafte Möglichkeit, ein entsprechendes Tastimpulssignal, das ein Schwarzwertdetektor liefert, auszuwerten. Der Aufwand hierfür ist äußerst gering, da bekannte Schwarzdetektoren, wie beispielsweise der in dem deutschen Patent DE-C 32 14 756 beschriebene Schwarzwertdetektor meist ein derartiges Tastimpuls-signal ohnehin liefern können, da in den Schwarzwertdetektoren ohnehin eine Erkennung der Synchronisationsimpulse und der Schwarzwertschultern stattfinden muß. Somit kann dieses Tastimpulssignal für die erfindungsgemäße Schaltungsanordnung in der Weise herangezogen werden, daß der Komparator in Abhängigkeit dieses Tastimpulssignals den Vergleich der ihm zugeführten Signale nur während der gewünschten Zeitspannen vornimmt.

Unabhängig davon, wie die Steuerung der Komparatorschaltung stattfindet, können an den Flanken der Synchronisationsimpulse des Bildsignals aufgrund von TimingProblemen falsche Vergleichsergebnisse auftreten. Hierzu kann vorteilhafterweise, wie gemäß einer weiteren Ausgestaltung der Erfindung vorgesehen ist, dem Komparator ein Tiefpaßfilter vorgeschaltet sein, mittels dessen das Bildsignal vorgefiltert wird. Damit werden die Flanken der Synchronisationsimpulse verschliffen, so daß die Timing-Probleme an den Flanken verringert werden.

Um diesen Effekt ggf. weiter zu verstärken, kann ferner, wie eine weitere Ausgestaltung der Erfindung vorsieht, das Tiefpaßfilter die positiven Flanken des Bildsignals mit einer größeren Zeitkonstante filtern als dessen Negativflanken. Damit wird insbesondere die Rückflanke der Synchronisationsimpulse stark verschliffen.

Gemäß einer weiteren Ausgestaltung der Erfindung ist vorgesehen, daß zusätzlich eine Ergänzungs-Regelschaltung vorgesehen ist, welche die Regelzeitkonstante zusätzlich in der Weise beeinflußt, daß dann, wenn der Spannungswert der in dem Bildsignal enthaltenen Synchronisationsimpulse einen vorgegeben Grenzwert unterschreitet, die Regelzeitkonstante verkleinert wird und daß dann, wenn der Spannungswert der in dem Bildsignal enthaltenen Synchronisationsimpulse den vorgegeben Grenzwert überschreitet, die Regelzeitkonstante vergrößert wird.

Diese Ergänzungs-Regelschaltung arbeitet also in relativ einfacher Weise mittels Vergleichs der in den Bildsignalen enthaltenen Synchronisationsimpulse mit einem vorgegebenen Grenzwert. Damit weist diese Ergänzungs-Regelschaltung die eingangs beschriebenen Nachteile auf. In Ergänzung der erfindungsgemäßen Verstärkungsregelung mit variabler Zeitkonstante, welche nicht mit einem festen Vergleichswert arbeitet, hat diese Schaltungsanordnung jedoch den Vorteil, daß die auch bei extrem kleinem Bild-ZF-Signal bzw. Bildsignal, dessen Synchronisationsimpuls ggf. nicht mehr korrekt identifiziert werden können, zuverlässig arbeitet. Es kann dann mittels dieser Ergänzungs-Regelschaltung eine Verkleinerung der Zeitkonstante vorgenommen werden.

Nachfolgend wird ein Ausführungsbeispiel der Erfindung anhand der Zeichnung näher erläutert. Es zeigen:
Fig. 1 ein Blockschaltbild eines erfindungsgemäßen Bild-ZF-Demodulators mit Verstärkungsregelung mit variabler Zeitkonstante,
Fig. 2 Zeitdiagramme einiger Signale der Schaltungsanordnung gemäß Fig. 1,
Fig. 3 eine detailliertere teilweise Darstellung der Schaltungsanordnung gemäß Fig. 1 und
Fig. 4 einige Zeitdiagramme der Schaltungsanordnung gemäß Fig. 1 bzw. Fig. 3.

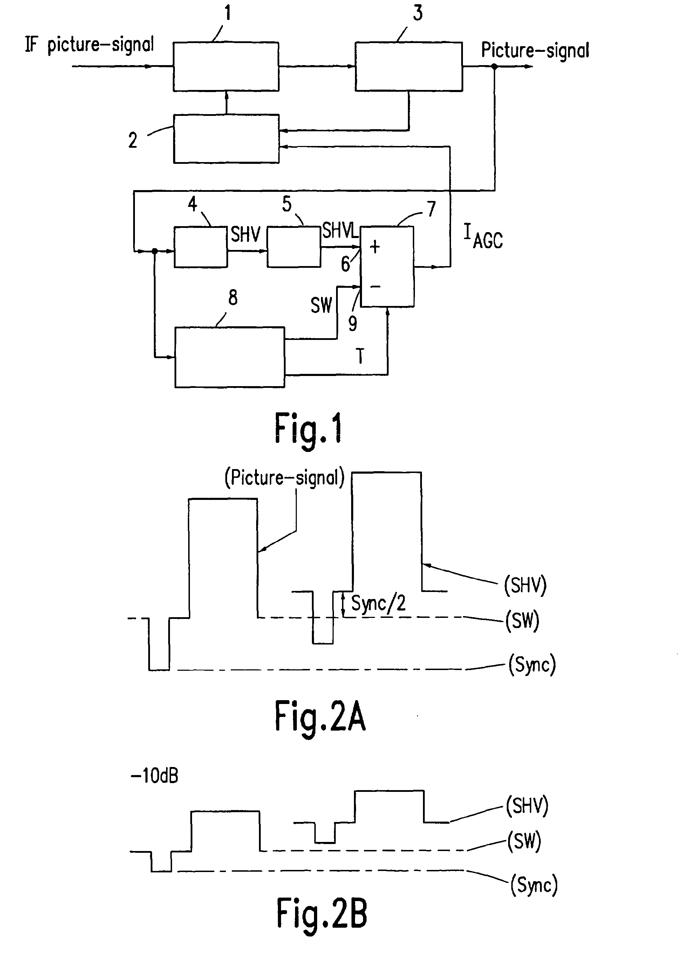

Fig. 1 zeigt in schematischer Darstellung in Form eines Blockschaltbildes eine erfindungsgemäßen Bild-ZF-Demodulatorschaltung mit Verstärkungsregelung mit variabler Zeitkonstante.

Diese weist eine Verstärkungsanordnung 1 auf, welche mit variabler Verstärkung, d.h. mit veränderbarem Verstärkungsfaktor, arbeitet. Zur Veränderung des Verstärkungsfaktors wird der Verstärkungsanordung 1 von einer Regelungsanordnung 2 ein entsprechendes Steuersignal zugeführt.

Der Verstärkungsanordnung 1 wird eingangsseitig ein mit einem Bildsignal amplitudenmodulierter Zwischenfrequenzträger zugeführt. Dieses Signal wird in der Zeichnung mit Bild-ZF bezeichnet. Es handelt sich dabei um ein dem Zwischenfrequenz-Bildträger positiv aufmoduliertes Bildsignal. Insbesondere kann es sich bei dem Bildsignal um ein SECAM-L-Signal handeln. Positiv aufmoduliert bedeutet, daß zu größerem Weiß hin tendierender Bildinhalt zu einer größeren Amplitude des Bildträgers und die in dem Bildsignal enthaltenen Synchronisationsimpulse zu einer kleineren Amplitude des Zwischenfrequenzträgers führen.

Dieses Bild-ZF-Signal wird in der Verstärkungsanordnung 1 verstärkt. Dabei ist der Verstärkungsfaktor dieser Anordnung variabel, so daß die Verstärkungsanordnung 1 ausgangsseitig das Bild-ZF-Signal mit einem Sollpegel liefert, der im Idealfall unabhängig von dem Eingangspegel des Bild-ZF-Signals ist.

Der Verstärkungsanordnung 1 ist ein ZF-Demodulator 3 nachgeschaltet, der das Bild-ZF-Signal demoduliert, so daß es ausgangsseitig als Basisbandsignal zur Verfügung steht, d.h. also als normales Bildsignal.

Zusätzlich zu der nachfolgend zu erläuternden erfindungsgemäßen Verstärkungsregelung mit variabler Zeitkonstante kann die Regelanordnung 2 so ausgelegt sein, daß in dem Ausgangssignal des Demodulators 3 die jeweils in der vertikal Austastlücke auftretenden 100%-Weißwerte detektiert und ebenfalls zur Verstärkungsregelung herangezogen werden. Dies ist insoweit bekannt und nicht Gegenstand der Erfindung. Diese Regelung kann ergänzend zur erfindungsgemäßen Regelung vorgesehen sein; sie weist jedoch den Nachteil auf, daß die entsprechenden 100%-Weißimpulse nur alle 20 msec in dem Bildsignal auftauchen. Dies wiederum hat zur Folge, daß mit einer großen Zeitkonstante bei der Verstärkungsregelung gearbeitet werden muß, so daß eine schnelle Nachregelung auf diese Weise nicht möglich ist.

Das Bildsignal aus dem Amplitudendemodulator 3 gelangt in der Schaltungsanordnung an eine Gleichspannungs-Offset-Schaltungsanordnung 4. Diese Gleichspannungs-Offset-Schaltungsanordnung 4 verschiebt das ihr zugeführte Bildsignal zu positiven Amplituden hin. Es wird also quasi der Gleichspannungsanteil dieses Signals verändert. Dies geschieht in der Weise, daß der Gleichspannungsanteil des Bildsignals um den Wert der halben nominalen Amplitude der in dem Bildsignal enthaltenen Synchronisationsimpulse erhöht wird. Dabei bezeichnet nominale Amplitude diejenige Amplitude, die die Synchronisationsimpulse bei einem Sollpegel des Bild-ZF-Signals am Ausgang der Verstärkungsanordnung 1 aufweisen sollen. Dieser Wert ist bekannt, da aufgrund der Spezifikation der Demodulationsanordnung die Größe der Synchronisationsimpulse bekannt ist und da ferner bekannt ist, welchen Pegel das Bild-ZF-Signal am Ausgang der Verstärkungsanordnung 1 aufweisen soll. Der unter diesen Bedingungen bestimmte halbe Wert der Amplitude der Synchronisationsimpulse ist derjenige Wert, um den das Bildsignal mittels der Offset-Schaltungsanordnung 4 zu höheren Amplituden hin verschoben wird. Die Schaltungsanordnung 4 liefert ausgangsseitig das entsprechend verschobene Signal, das in der Figur 1 mit SHV gekennzeichnet, ist.

Dieses Signal gelangt auf ein Tiefpaßfilter 5, welches insbesondere eine Filterung des ihm zugeführten Signals in der Weise vornimmt, daß abfallende Flanken mit kleiner Zeitkonstanten gefiltert werden als ansteigende Flanken. Dies hat zur Folge, daß insbesondere die Rückflanken der in dem von der Schaltungsanordnung 4 gelieferten verschobenen Bildsignale enthaltenen Synchronisationsimpulse stark verschliffen werden.

Das so gefilterte Signal, das in der Fig. 1 mit SHVL gekennzeichnet ist, gelangt auf einen positiven Eingang 6 eines Komparators 7.

Das vom Amplitudendemodulator 3 gefilterte Bildsignal gelangt innerhalb der Schaltungsanordnung ferner an eine Schwarzwert-Detektor-Schaltungsanordnung 8. Diese Schaltungsanordnung 8 bestimmt den Spannungswert des Schwarzwertes des Bildsignals, d.h. den Spannungswert der Schwarzschultern, die in dem Bildsignal zeitlich vor bzw. hinter dem aktiven Bildbereich vorgesehen sind. Diese Schwarz wert-Detektor-Schaltungsanordnung 8 arbeitet in an sich bekannter Weise, beispiels weise wie in der deutschen Patentschrift 32 14 756 beschrieben.

Die Schaltungsanordnung 8 liefert ausgangsseitig ein Signal SW, welches den Spannungswert des Schwarzwertes des ihm eingangsseitig zugeführten Bildsignals angibt. Dieses Signal gelangt auf einen invertierenden Eingang 9 des Komparators 7.

In Schaltungsanordnungen, die den Schwarzwert des Bildsignals detektieren, ist es immer erforderlich, die verschiedenen Signalanteile des gesamten Bildsignals zu identifizieren, d.h. diejenigen Zeitspannen, in denen Synchronisationsimpulse, Schwarzwert und Bildinhalt in dem Bildsignal auftreten. Diese Information kann dazu herangezogen werden, ein entsprechendes Tastsignal T zu liefern, welches die Zeiten, in denen Synchronisationsimpulse in dem Bildsignal auftreten, indiziert. Dieses Signal T wird ebenfalls dem Komparator 7 zugeführt, der nur während derjenigen Zeiten, in denen das Signal T einen Synchronisationsimpuls in dem Bildsignal indiziert, ein Komparatorsignal liefert, welches ein Vergleichssignal der ihn an den Eingängen 6 und 7 zugeführten Signale darstellt. Dieses Signal ist in der Fig. 1 mit I_{AGC} gekennzeichnet und wird der Regelschaltung 2 zugeführt. Dieses Signal I_{AGC} gibt während der in dem Bildsignal auftretenden Synchronisationsimpulse an, ob das um den halben nominalen Wert der Amplitude der Synchronisationsimpulse verschobene und anschließend tiefpaßgefilterte Signal größer oder kleiner ist als der Schwarzwert des Bildsignals SW. Anhand dieses Signals verändert die Regelschaltung 2 die Zeitkonstante, mit der eine Nachführung der Regelung des Verstärkungsfaktors der Verstärkungsanordnung 1 vorgenommen wird. Weist das Bildsignal relativ kleinen Pegel auf, d.h. ist die Verstärkung deutlich zu erhöhen, so wird die Regelzeitkonstante verkleinert. Im umgekehrten Falle wird die Regelzeitkonstante vergrößert. Die diesbezüglichen Verhältnisse werden anhand der schematischen Zeitdiagramm-Darstellung gemäß Fig. 2 nachfolgend näher erläutert. Die Darstellung a in Fig. 2 zeigt die positive Hälfte der Hüllkurve eines Bild-ZF-Signals. Diese Hüllkurve bzw. das Bildsignal ist in der Darstellung über der Zeit aufgetragen. In diesem Signal ist ein Synchronisationsimpuls, dessen Amplitude mit Sync bezeichnet ist, erkennbar. Dem Synchronisationsimpuls folgt zeitlich eine Schwarzschulter, die einen Spannungswert SW aufweist. Der Schwarzschulter folgt der Bildinhalt, der hier beispielhaft mit 100% gekennzeichnet ist.

Ebenfalls in der Darstellung a der Fig. 1 ist das entsprechende Bildsignal nochmals dargestellt, jedoch um die halbe nominale Amplitude sync/2 der Synchronisationsimpulse zu größerer Amplitude hin verschoben, d.h. mit entsprechend verändertem Gleichspannungsanteil bezeichnet mit SHV. In der Darstellung von Fig. 2 wird davon ausgegangen, daß das dort dargestellte Signal Soll-Amplitude aufweist, so daß eine Verschiebung um die Hälfte der Amplitude der Synchronisationsimpulse vorgenommen wird.

Die Darstellung a zeigt, daß der Synchronisationsimpuls des verschobenen Bildsignals SHV den Amplitudenwert SW des Schwarzwertes des nicht verschobenen Bildsignals unterschreitet. Für die Darstellung gemäß Fig. 1 bedeutet dies, daß das Ausgangssignal des Komparators 7, das mit I_{AGC} gekennzeichnet ist, den Wert Null an die Regelschaltung 2 liefert. Das ist der Fall, wenn der Synchronisationsimpuls des um die halbe Nominale des Synchronisationsimpulsamplitude verschobene Bildsignals den Schwarzwert des nicht verschobenen Bildsignals unterschreitet. Damit wird in der Regelschaltung 2 auf große Zeitkonstante geschaltet, da das Bildsignal bereits in etwa Sollpegel aufweist und somit eine schnelle Regelung nicht mehr erforderlich ist.

Anders liegen die Verhältnisse jedoch bei der Darstellung b von Fig. 2. Es ist hier wiederum zunächst ein Bildsignal mit Synchronisationsimpuls, Schwarzschulter und aktivem Bildinhalt symbolisch dargestellt. Dieses Signal wird wiederum um die halbe nominale Amplitude des Synchronisationsimpulses verschoben. Hierbei ist zu beachten, daß es sich um die nominale Amplitude, nicht die tatsächliche Amplitude des Synchronisationsimpulses handelt. Nominale Amplitude bezeichnet hierbei diejenige Amplitude, die der Synchronisationsimpuls bei Sollpegelwert des Bildsignals aufweisen sollte.

Der Synchronisationsimpuls des Bildsignals in Darstellung b der Fig. 2 weist jedoch einen kleineren Amplitudenwert auf als es dem Nominalamplitudenwert des Synchronisationsimpulses entspräche. Gleichwohl wird eine Verschiebung des Bildsignals um den halben nominalen Wert der Amplitude des Synchronisationsimpulses vorgenommen. Das entsprechende Signal ist in Fig. 2 ebenfalls mit SHV gekennzeichnet. Die Darstellung b von Fig. 2 zeigt, daß der in dem verschobenen Bildsignal enthaltene Synchronisationsimpuls den Spannungswert des Schwarzwertes SW des nicht verschobenen Bildsignals überschreitet. Die Ursache hierfür liegt in der deutlich zu kleinen Amplitude des gesamten Bildsignals. Der Komparator 7 liefert in dem Ausgangssignal I_{AGC} ein entsprechendes Signal an die Regelschaltung der Darstellung gemäß Fig. 1. Damit schaltet die Regelschaltung 2 auf eine kleinere Zeitkonstante um, so daß der deutlich zu kleine Pegelwert des Bildsignals gemäß der Darstellung Fig. 2b relativ schnell korrigiert werden kann.

Somit wird in Abhängigkeit der Pegelwerte des Bildsignals eine Umschaltung der Zeitkonstante der Verstärkungsregelung erreicht, die von einem gegebenenfalls vorliegenden DC-Offset des ihr eingangsseitig zugeführten Bildsignals aus dem Amplitudendemodulator unabhängig ist. Dies wird dadurch erreicht, daß der Schwarzwert des nicht verschobenen Signals mit dem Spannungswert der Synchronisationsimpulse des verschobenen Signals verglichen wird. Somit ist dieser Vergleich unabhängig von externen Schwellwerten und unabhängig von der absoluten Offsetlage des Bildsignals.

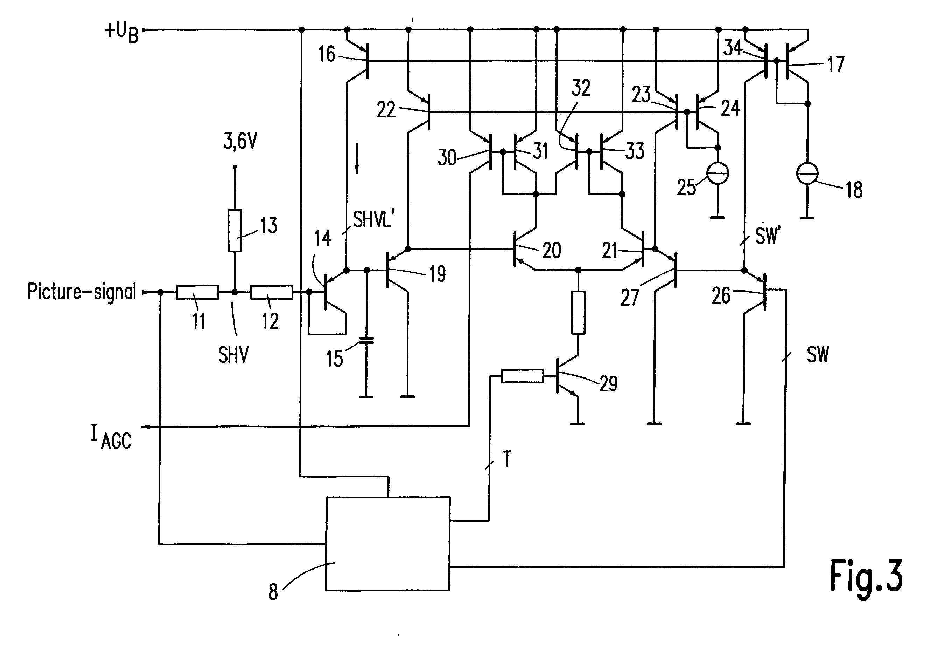

In Fig. 3 ist ein detaillierteres Schaltbild von Teilen der Schaltungsanordnung gemäß Fig. 1 dargestellt. Es sind insbesondere die Offset-Schaltung 4, das Tiefpaßfilter 5 und der Komparator 7 detailliert dargestellt. Die Schwarzwert-Detektor-Schaltungsanordnung 8 ist in Fig. 3 entsprechend der Darstellung gemäß Fig. 1 lediglich als Schaltungsblock dargestellt. Sie kann insbesondere entsprechend der deutschen Patentschrift 32 14 756 ausgeführt sein.

Der Schaltung gemäß Fig. 3 wird eingangsseitig das Bildsignal zugeführt. Die gesamte Schaltungsanordnung ist einerseits mit Bezugspotential (Masse) andererseits mit einem Versorgungspotential U_{B} versorgt.

Das der Schaltungsanordnung gemäß Fig. 3 eingangsseitig zugeführte Bildsignal gelangt auf die Reihenschaltung zweier Widerstände 11 und 12, deren Verbindungspunkt über einen Widerstand 13 mit einem positiven Potential, insbesondere einem Potential von 3,6 Volt, verbunden ist. Mittels der Widerstände 11, 12, 13 wird eine Verschiebung des Gleichspannungsanteils des Bildsignals zu positiver Amplitude hin vorgenommen. Dem Widerstand 12 ist ein als Diode verschalteter Transistor 14 nachgeschaltet, dessen ausgangsseitiger Emitter über eine Kapazität 14 mit Bezugspotential gekoppelt ist. Die von der Anordnung der Widerstände 11, 12 und 13 gebildete Impedanz in Verbindung mit dem Wert der Kapazität 15 bestimmt das Tiefpaßverhalten dieses Teils der Schaltungsanordnung und bestimmt die Abfallzeit, d.h. die Zeitkonstante an negativen Flanken des Bildsignals. Die Zeitkonstante an positiven Flanken, d.h. die Anstiegszeit wird bestimmt durch den Strom, den ein ferner vorgesehener Transistor 16 liefern kann. Ferner ist die Anstiegszeit ebenfalls von dem Wert der Kapazität 15 abhängig.

Der Transistor 16 ist gemeinsam mit einem ferner vorgesehenen Transistor 17 als Stromspiegelschaltung ausgebildet, welche auf den Verbindungspunkt von Transistor 14 und Kapazität 15 einen Strom spiegelt, der von einer Stromquelle 18 geliefert wird, und bei dem es sich beispielsweise um einen Strom von 0,13 µA handeln kann.

Durch das so erzeugte Tiefpaßverhalten steht an dem Verbindungspunkt von Transistor 14 und Kapazität 15 das tiefpaßgefilterte Signal SHVL entsprechend der Darstellung von Fig. 1 zu Verfügung.

Dieses Signal gelangt über einen als Spannungsfolger geschalteten Transistor 19 zu einem Komparator, der mittels zweier Transistoren 20, 21 aufgebaut ist.

Es ist eine weitere Stromspiegelschaltung mit Transistoren 22, 23 und 24 vorgesehen, welche auf beide Eingänge der Komparatorschaltung, die aus den Transistoren 21 und 22 aufgebaut ist, einen Strom einer Stromquelle 25 koppelt, welche beispielsweise einen Strom von etwa 3 µA liefern kann.

Auf den anderen Eingang der durch die Transistoren 20 und 21 gebildeten Komparatorschaltung gelangt das Schwarzwert-Signal SW, das zuvor Transistoren 26 und 27 passiert hat. Auf den Emitter des Transistors 26 ist mittels eines Transistors 34 der Strom der Stromquelle 18 durch die Transistoren 17 und 34 gebildete Stromspiegelschaltung eingekoppelt. Auf den Emitter des Transistors 27 ist der Strom der Stromquelle 25 über die als Stromspiegelschaltung verschalteten Transistoren 23 und 24 gekoppelt.

Somit findet in der durch die Transistoren 20 und 21 gebildeten Komparatorschaltung ein Vergleich des Schwarzwertes SW des nicht verschobenen Bildsignals mit den um den halben nominalen Amplitudenwert der Synchronimpulse verschobenen Synchronimpulsen des Bildsignals statt.

Da dieser Vergleich nur während der in dem Bildsignal auftretenden Synchronisationsimpulse vorgenommen werden soll, liefert der Schwarzwertdetektor 8 ein entsprechendes Tastsignal T, in Abhängigkeit dessen der Komparator mittels eines Transistors 29 gegen Bezugspotential geschaltet wird.

Das Ausgangssignal des Komparators gelangt über Transistoren 30, 31, 32 und 33, von denen jeweils zwei als Stromspiegelschaltung geschaltet sind, als I_{AGC} bezeichnetes Vergleichssignal an die Regelschaltung 2 der Anordnung gemäß Fig. 1. Die aus den Transistoren 32 und 33 gebildete Stromspiegelschaltung spiegelt den Strom des Kollektors des Transistors 21 auf den Kollektor des Transistors 20. Dessen Strom wiederum wird über die aus den Transistoren 30 und 31 gebildete Stromspiegelschaltung in dem Ausgangssignal I_{AGC} der Schaltungsanordnung abgebildet. Bei diesem Signal handelt es sich um das Vergleichssignal zwischen dem Schwarzwert des nicht verschobenen Bildsignals und der Amplitude der Synchronisationsimpulse des um den halben nominalen Amplitudenwert der Synchronisationsimpulse verschobenen Bildsignals. Dieses Vergleichssignal I_{AGC} wird zur Umschaltung der Regelzeitkonstante der Verstärkungsregelung entsprechend der Darstellung und der entsprechenden Erläuterung der Fig. 1 eingesetzt.

In der Darstellung gemäß Fig. 3 werden einige Signale bezüglich ihres Potentials schaltungsintern verschoben. Diese Signale sind mit einem Strich gekennzeichnet. So ist der Schwarzwert SW' hinter dem Transistor 26 mit SW gekennzeichnet. Entsprechend tritt an dem Verbindungspunkt 14 und der Kapazität 15 das tiefpaßgefilterte Signal als SHVL'-Signal auf.

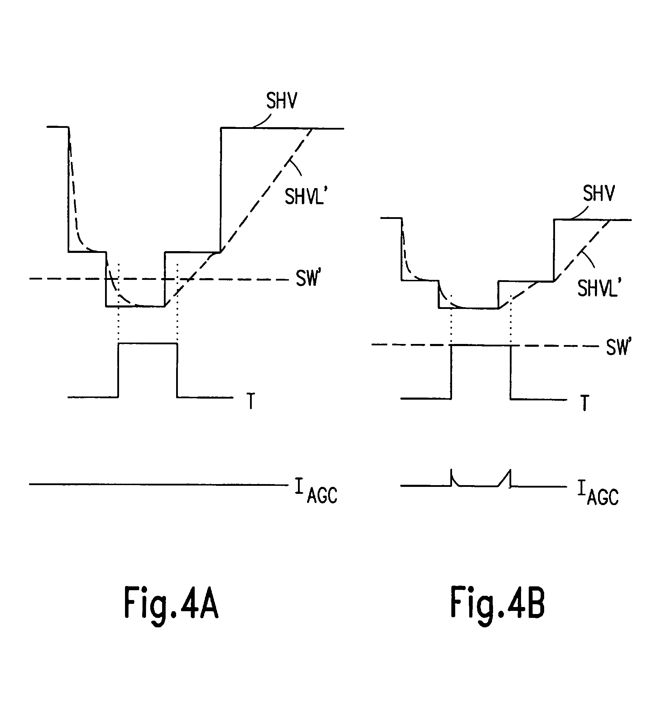

In Fig. 4 sind zwei Zeitdiagramme a und b beispielhaft dargestellt, welche zeitliche Verläufe von in der Schaltungsanordnung gemäß Fig. 3 auftretenden Signale darstellen. Fig. 4a zeigt ein bezüglich seines Gleichspannungsanteils bereits um den halben nominalen Amplitudenwert der Synchronisationsimpulse verschobenes Videosignal SHV. Am Verbindungspunkt zwischen dem Transistor 14 und der Diode 15 tritt dieses Signal in tiefpaßgefilterter Form als Signal SHVL' auf. Die Darstellung gemäß Fig. 4a zeigt, daß die Abfallzeiten mit kleinerer Zeitkonstante gefiltert werden als die Anstiegsflanken. Dieses wird in oben beschriebener Weise dadurch erreicht, daß in der Schaltungsanordnung gemäß Fig. 3 die Abfallzeit durch die Werte der Widerstände 11 bis 13 und der Kapazität 15 bestimmt wird, während die Anstiegszeit durch den von der Stromspiegelschaltung 16, 17 gelieferten Strom und den Wert der Kapazität 15 bestimmt wird.

Durch die Verschleifung insbesondere an der positiven Flanke des Synchronisationsimpulses in der Darstellung gemäß Fig. 4a wird erreicht, daß der Vergleich zwischen dem Spannungswert des Synchronisationsimpulses des verschobenen Bildsignals SHV und dem Schwarzwert SW' nicht exakt während des Synchronisationsimpulses vorgenommen werden muß.

Wie die Darstellung gemäß Fig. 2 ebenfalls zeigt, tritt das von dem Schwarzwertdetektor 8 gelieferte Tastsignal T mit geringer zeitlicher Verzögerung auf, d.h. der Impuls in dem Tastsignal T tritt etwas später auf als der Synchronisationsimpuls in dem bezüglich seines Gleichspannungsanteils verschobenen Bildsignal SHV. Durch den Einsatz der Tiefpaßfilterschaltung wird jedoch erreicht, daß das Tastsignal T gleichwohl zum Tasten des Komparators herangezogen werden kann. Wie die Darstellung gemäß Fig. 4 zeigt, unterschreitet die Amplitude des Synchronisationsimpulses des verschobenen Bildsignals die Amplitude des Schwarzwertes SW'. Trotz des etwas verschobenen Impulses in dem Tastsignal T wird dieses richtig erkannt, d.h. während der Zeitspanne des Impulse des Tastsignals T unterschreitet das tiefpaßgefilterte Signal SHVL' den Spannungswert des Schwarzwertsignals SW'. Entsprechend liefert die Schaltungsanordnung gemäß Fig. 3, d.h. insbesondere der aus den Transistoren 20 und 21 gebildete Komparator, während dieser Zeitspanne kein Ausgangssignal.

Die Darstellung gemäß Fig. 4b weist eine Darstellung gemäß Fig. 4a auf, bei der jedoch der Pegelwert des Bildsignals SHV deutlich geringer ist. Gleichwohl wurde dieses Signal in der Darstellung gemäß Fig. 4b und den halben nominalen Amplitudenwert der Synchronisationsimpulse verschoben. Die Darstellung gemäß Fig. 4b zeigt, daß das tiefpaßgefilterte Signal SHVL', d.h. das tiefpaßgefilterte, um den halben nominalen Amplitudenwert der Synchronisationsimpulse verschobene Bildsignal während des in dem Tastsignal T auftretenden Tastimpulses während einiger Zeiten, insbesondere am Anfang und am Ende dieses Tastimpulses, den Spannungswert des Schwarzwertsignales SW' überschreitet. Während dieser Zeitspannen liefert der durch die Transistoren 20 und 21 der Schaltungsanordnung gemäß Fig. 3 gebildete Komparator ein Ausgangssignal I_{AGC}, welches während dieser Zeiten positive Impulse enthält.

Diese gelangen in der Schaltungsanordnung gemäß Fig. 1 an die Regelschaltung 2, die entsprechend dieser Impulse die Regelzeitkonstante verkleinert. Dies ist entsprechend dem Signalwert des Bildsignals in der Darstellung gemäß Fig. 4b sinnvoll, da das Bildsignal zu kleine Pegelwerte aufweist, so daß eine schnelle Verstärkungsregelung erforderlich ist, um das Bildsignal möglichst schnell auf Soll-Pegelwerte zu bringen. Bei noch kleineren Pegelwerten des Bildsignals liefert der Komparator während der gesamten Dauer T ein Ausgangssignal I_{AGC}.

Zusätzlich zu dieser erfindungsgemäßen Anordnung kann eine weitere Ergänzungs-Regelschaltung vorgesehen sein, die in keiner der Figuren dargestellt ist. Diese Ergänzungs-Regelschaltung kann außerdem die Regelzeitkonstante der Verstärkungsregelung beeinflussen. Diese kann dazu so ausgebildet sein, daß sie, wenn der Spannungswert SW des druch den Schwarzwertdetektor 8 detektierten Schwarzwertes des Bildsignals einen festen, vorgegebenen Ganzwert unterschreitet, die Regelzeitkonstante verkleinert und daß sie dann, wenn der Spannungswert den vorgegebenen überschreitet, die Regelzeitkonstante vergrößert. Damit wird insbesondere auch dann eine Regelung bzw. eine Nachführung der Regelzeitkonstante gewährleistet, wenn das Bildsignal extrem kleine Pegelwerte aufweisen sollte, bei denen unter Umständen Synchronisationsimpulse nicht mehr detektierbar sind, was zur Folge hat, daß die Schwarzwertdetektorschaltung auch keine Tastimpulse liefern kann. Damit findet dann kein Vergleich in dem Komparator mehr statt, so daß die erfindungsgemäße Schaltungsanordnung während dieser Zeitspanne u.U. kein Ausgangssignal liefert. Während dieser Zeitspanne kann dann die Eränzungsregelschaltung eine Regelung durchführen. Sobald die Regelung eingesetzt hat, erhöht sich der Pegelwert des ZF-Bildsignals relativ schnell, so daß die erfindungsgemäße Regelschaltung greift.

## Patentansprüche

1. Bild-ZF-Demodulatorschaltung mit ZF-Verstärkungsregelung mit variabler Zeitkonstante, der ein Synchronisationsimpulse, eine Schwarzschulter und Bildinformationen enthaltender Zwischenfrequenz-Bildträger mit positiv aufmoduliertem Bildsignal zugeführt wird, welche mittels der Verstärkungsregelung das Bild-ZF-Signal auf einen Soll-Amplitudenwert verstärkt und welche einen ZF-Demodulator (3) aufweist, der das ZF-Bildsignal demoduliert und ausgangsseitig ein Bildsignal liefert,
**dadurch gekennzeichnet,**
**daß** ein Schwarzwertdetektor (8) mit Mitteln zur Erzeugung eines als Schwellwertsignal eingesetzten Schwarzwertsignals, dessen Amplitudenwert von dem Amplitudenwert der Schwarzschulter des vom Amplitudendemodulator (3) gelieferten Bildsignals abhängig ist, vorgesehen ist, daß eine Gleichspannungs-Offset-Schaltungsanordnung (4) vorgesehen ist, welche eine Anhebung des Gleichspannungsanteils des Bildsignals und/oder eine Absenkung des Gleichspannungsanteils des Schwellwertsignals in der Weise vornimmt, daß beide Signale relativ zueinander um einen vorgegebenen Wert verschoben werden, daß eine Komparatorschaltung (7) vorgesehen ist, der die beiden relativ zueinander verschobenen Signale zugeführt werden, in denen die Komparatorschaltung den Spannungswert der in dem Bildsignal auftretenden Synchronisationsimpulse mit dem Spannungswert des Schwellwertsignals vergleicht, und daß die Komparatorschaltung (7) ein Vergleichssignal liefert, dessen Amplitude von der Ergebnis-Amplitude dieses Vergleichs abhängig ist und die Zeitkonstante der Verstärkungsregelung verändert.

2. Bild-ZF-Demodulatorschaltung nach Anspruch 1,
**dadurch gekennzeichnet, daß** die Gleichspannungs-Offset-Schaltung (4) eine relative Verschiebung des Schwellwertsignals und des Bildsignals zueinander um die halbe nominale Amplitude der Synchronisationsimpulse vornimmt.

3. Bild-ZF-Demodulatorschaltung nach Anspruch 1, **dadurch gekennzeichnet, daß** die Gleichspannungs-Offset-Schaltung (4) eine Anhebung des Gleichspannungsanteils des Bildsignals um die halbe nominale Amplitude der Synchronisationsimpulse vornimmt.

4. Bild-ZF-Demodulatorschaltung nach einem der Ansprüche 1 bis 3,
**dadurch gekennzeichnet,**
**daß** dann, wenn der mittels des Komparators (17) durchgeführte Vergleich ergibt, daß ein Synchronisationsimpuls das Schwellwertsignal unterschreiter, die Regelzeitkonstante vergrößert wird und daß dann, wenn der Vergleich ergibt, daß ein Synchronisationsimpuls das Schwellwertsignal überschreitet, die Regelzeitkonstante verkleinert wird.

5. Bild-ZF-Demodulatorschaltung nach einem der Ansprüche 1 bis 4,
**dadurch gekennzeichnet, daß** der Schwarzwertdetektor (8) ein Tastimpuls-Signal liefert, das die in dem Bildsignal auftretenden Synchronisationsimpulse kennzeichnet und das von der Komparatorschaltung (7) ausgewertet wird.

6. Bild-ZF-Demodulatorschaltung nach einem der Ansprüche 1 bis 5,
**dadurch gekennzeichnet,**
**der** Komparatorschaltung ein Tiefpassfilter (5) vorgeschaltet ist, mittels dessen das Bildsignal vorgefiltert wird.

7. Bild-ZF-Demodulatorschaltung nach Anspruch 6,
**dadurch gekennzeichnet, daß** das Tiefpassfilter (5) die postiven Flanken des Bildsignals mit einer größeren Zeitkonstante filtert als die negativen Flanken.

8. Bild-ZF-Demodulatorschaltung nach einem der Ansprüche 1 bis 7,
**dadurch gekennzeichnet, daß** zusätzlich eine Ergänzungs-Regelschaltung vorgesehen ist, welche die Regelzeitkonstante zusätzlich in der Weise beeinflußt, daß dann, wenn der Spannungswert (SW) des durch den Schwarzwertdetektor (8) detektierten Schwarzwertes des Videosignals einen vorgegebenen Grenzwert unterschreitet, die Regelzeitkonstante verkleinert wird und daß dann, wenn dieser Spannungswert den vorgegeben Grenzwert überschreitet, die Regelzeitkonstante vergrößert wird.

9. Fernsehtuner mit einer Bild-ZF-Demodulatorschaltung mit Verstärkungregelung mit variabler Zeitkonstante nach einem der Ansprüche 1 bis 8.

10. Bildwiedergabegerät mit einem Fersehtuner, welcher eine Bild-ZF-Demodulatorschaltung mit Verstärkungregelung mit variabler Zeitkonstante nach einem der Ansprüche 1 bis 8-aufweist.

## Claims

1. An IF picture demodulator circuit with IF gain control at a variable time constant, which receives an IF picture carrier comprising synchronizing pulses, a black porch and picture information with a positively modulated picture signal, in which the IF picture signal is amplified to a nominal amplitude value by means of the gain control and which comprises an IF demodulator (3) which demodulates the IF picture signal and supplies a picture signal on the output, **characterized in that** a black level detector (8) is provided comprising means for generating a black level signal used as a threshold value signal whose amplitude value depends on the amplitude value of the black porch of the picture signal supplied by the amplitude demodulator (3), **in that** a DC offset circuit (4) is provided, which raises the DC component of the picture signal and/or lowers the DC component of the threshold value signal in such a way that both signals are offset relative to each other by a predetermined value, **in that** a comparator circuit (7) is provided which receives the two signals which are offset relative to each other, in which signals the comparator circuit compares the voltage value of the synchronizing pulses occurring in the picture signal with the voltage value of the threshold value signal, and **in that** the comparator circuit (7) supplies a comparison signal whose amplitude depends upon the amplitude resulting from this comparison and which comparison signal changes the time constant of the gain control.

2. An IF picture demodulator circuit as claimed in claim 1, **characterized in that** the DC offset circuit (4) offsets the threshold value signal and the picture signal relative to each other by half the nominal amplitude of the synchronizing pulses.

3. An IF picture demodulator circuit as claimed in claim 1, **characterized in that** the DC offset circuit (4) raises the DC component of the picture signal by half the nominal amplitude of the synchronizing pulses.

4. An IF picture demodulator circuit as claimed in any one of claims 1 to 3, **characterized in that** the control time constant is increased when the comparison performed by the comparator (17) shows that a synchronizing pulse falls below the threshold value signal, and **in that** the control time constant is decreased when the comparison shows that a synchronizing pulse exceeds the threshold value signal.

5. An IF picture demodulator circuit as claimed in any one of claims 1 to 4, **characterized in that** the black level detector (8) supplies a keying pulse signal which characterizes the synchronizing pulses occurring in the picture signal and is evaluated by the comparator circuit (7).

6. An IF picture demodulator circuit as claimed in any one of claims 1 to 5, **characterized in that** the comparator circuit is preceded by a low-pass filter (5) by means of which the picture signal is pre-filtered.

7. An IF picture demodulator circuit as claimed in claim 6, **characterized in that** the low-pass filter (5) filters the positive edges of the picture signal with a larger time constant than the negative edges.

8. An IF picture demodulator circuit as claimed in any one of claims 1 to 7, **characterized in that** a complementary control circuit is also provided which additionally influences the control time constant in such a way that the control time constant is decreased when the voltage value (SW) of the video signal black level detected by the black level detector (8) falls below a predetermined limit value, and that the control time constant is increased when this voltage value exceeds the predetermined limit value.

9. A television tuner including an IF picture demodulator circuit with gain control at a variable time constant, as claimed in any one of claims 1 to 8.

10. A picture display device including a television tuner which is provided with an IF picture demodulator circuit with gain control at a variable time constant, as claimed in any one of claims 1 to 8.

## Revendications

1. Circuit de démodulation de fréquence intermédiaire d'image avec réglage de l'amplification à fréquence intermédiaire avec constante de temps variable, dans lequel est introduite une porteuse d'image à fréquence intermédiaire, contenant des impulsions de synchronisation, un palier de noir et des informations d'image, avec un signal d'image surmodulé positivement, lequel circuit amplifie le signal d'image à fréquence intermédiaire au moyen du réglage de l'amplification à une valeur d'amplitude de consigne et lequel circuit comporte un démodulateur de fréquence intermédiaire (3) qui démodule le signal d'image à fréquence intermédiaire et délivre en sortie un signal d'image,
**caractérisé**
**en ce qu'**il est prévu un détecteur de palier de noir (8) ayant des moyens pour générer un signal de palier de noir servant de signal de valeur de seuil dont la valeur d'amplitude dépend de la valeur d'amplitude du palier de noir du signal d'image délivré par le démodulateur d'amplitude (3), en ce qu'il est prévu un agencement de circuit de décalage de tension continue (4) qui réalise une augmentation d'une partie de tension continue du signal d'image et/ou une diminution de la partie de tension continue du signal de valeur de seuil de manière telle que les deux signaux soient décalés l'un vers l'autre d'une valeur prédéfinie, en ce qu'il est prévu un circuit comparateur (7) dans lequel sont introduits les deux signaux décalés l'un vers l'autre dans lesquels le circuit comparateur compare la valeur de tension des impulsions de synchronisation apparaissant dans le signal d'image avec la valeur de tension du signal de valeur de seuil, et en ce que le circuit comparateur (7) délivre un signal de comparaison dont l'amplitude dépend de l'amplitude résultant de cette comparaison et modifie la constante de temps du réglage d'amplification.

2. Circuit de démodulation de fréquence intermédiaire d'image selon la revendication 1, **caractérisé en ce que** le circuit de décalage de tension continue (4) réalise un décalage relatif du signal de valeur de seuil et du signal d'image l'un vers l'autre de la moitié de l'amplitude nominale des impulsions de synchronisation.

3. Circuit de démodulation de fréquence intermédiaire d'image selon la revendication 1, **caractérisé en ce que** le circuit de décalage de tension continue (4) réalise une augmentation de la partie de tension continue du signal d'image de la moitié de l'amplitude nominale des impulsions de synchronisation.

4. Circuit de démodulation de fréquence intermédiaire d'image selon l'une quelconque des revendications 1 à 3, **caractérisé en ce que**,
ensuite lorsqu'il résulte de la comparaison effectuée au moyen du comparateur (17) qu'une impulsion de synchronisation devient inférieure au signal de valeur de seuil, la constante de temps de réglage est augmentée et
**en ce que**, ensuite lorsqu'il résulte de la comparaison qu'une impulsion de synchronisation devient supérieure au signal de valeur de seuil, la constante de temps de réglage est diminuée.

5. Circuit de démodulation de fréquence intermédiaire d'image selon l'une quelconque des revendications 1 à 4,
**caractérisé en ce que** le détecteur de palier de noir (8) délivre un signal d'impulsion d'échantillonnage qui caractérise les impulsions de synchronisation apparaissant dans le signal d'image et qui est évalué par le circuit comparateur (7).

6. Circuit de démodulation de fréquence intermédiaire d'image selon l'une quelconque des revendications 1 à 5, **caractérisé en ce que**,
un filtre passe-bas (5) est placé en amont du circuit comparateur et réalise un préfiltrage du signal d'image.

7. Circuit de démodulation de fréquence intermédiaire d'image selon la revendication 6,
**caractérisé en ce que** le filtre passe-bas (5) filtre les flancs positifs du signal d'image avec une constante de temps plus grande que celle utilisée pour les flancs négatifs.

8. Circuit de démodulation de fréquence intermédiaire d'image selon l'une quelconque des revendications 1 à 7,
**caractérisé en ce qu'**il est prévu en outre un circuit de réglage complémentaire qui influe en outre sur la constante de temps de réglage de manière telle que, ensuite lorsque la valeur de tension (SW) du palier de noir du signal vidéo détecté par le détecteur de palier de noir (8) devient inférieure à une valeur limite prédéfinie, la constante de temps de réglage est diminuée, et que, ensuite lorsque cette valeur de tension devient supérieure à la valeur limite prédéfinie, la constante de temps de réglage est augmentée.

9. Récepteur de télévision pourvu d'un circuit de démodulation de fréquence intermédiaire d'image avec réglage de l'amplification avec constante de temps variable selon l'une quelconque des revendications 1 à 8.

10. Appareil de reproduction d'image pourvu d'un récepteur de télévision qui comporte un circuit de démodulation de fréquence intermédiaire d'image pourvu d'un réglage de l'amplification avec une constante de temps variable selon l'une quelconque des revendications 1 à 8.
